# EUROPÄISCHE PATENTANMELDUNG

(11) **EP 1 515 244 A2**
(43) Veröffentlichungstag der Anmeldung: **16.03.2005**
(21) Anmeldenummer: 04020481.0
(22) Anmeldetag: 28.08.2004
(51) Int. Cl.: G06F 17/30

(54) **Abbildung einer Klassenhierarchie auf ein relationales Datenbanksystem**

(30) Priorität: 11.09.2003 DE 10343328
(71) Anmelder: Optimum Gesellschaft für Automatisierungstechnik mbH, 71686 Remseck (DE)
(72) Erfinder: Nübling, Markus, 79211 Denzlingen (DE)
(74) Vertreter: Patentanwälte Ruff, Wilhelm, Beier, Dauster & Partner

(57) **Zusammenfassung**

2.1. Die Erfindung betrifft ein Verfahren zum Abbilden eines durch eine Klassenhierarchie modellierten technischen Systems in eine relationale Datenbank.
2.2. Erfindungsgemäß ist hierzu ein Verfahren zum Abbilden eines durch eine Klassenhierarchie modellierten technischen Systems in eine relationale Datenbank vorgesehen, wobei in einem ersten Schritt jeweils eine Tabelle für jede Klasse der Klassenhierarchie erzeugt wird, in der abzulegenden Instanzen der Klasse als einzelne Datensätze ablegbar sind, wobei die abzulegenden Attribute der Klasse in Spalten der Tabelle abgelegt werden, und in einem zweiten Schritt eine Sicht für jede Klasse, von der in der Klassenhierarchie wenigstens eine Klasse abgeleitet wurde, erzeugt wird, wobei diese Sicht alle Instanzen ihrer zugehörigen Klasse sowie alle Instanzen der von ihr abgeleiteten Klassen enthält.
2.3. Einsatz für das Abspeichern objektorientiert modellierter technischer Systeme in relationale Datenbanken.

## Beschreibung

Die Erfindung betrifft ein Verfahren zum Abbilden eines durch eine Klassenhierarchie modellierten technischen Systems in eine relationale Datenbank.

Objektorientierte Anwendungen sind heutzutage Stand der Technik. Die Daten, mit denen solche Anwendungen umgehen, liegen in Form von Instanzen von Klassen vor. Diese Klassen stellen dabei einen Bauplan dar, der festlegt, welche Attribute (Daten) die Instanzen der Klasse aufweisen und welche Methoden (Funktionalität) zur Verfügung stehen, um mit diesen Daten umzugehen. Die Klassen dieser objektorientierten Anwendungen können dabei voneinander abgeleitet sein, das bedeutet, dass eine Klasse im Zuge des Ableitens die Attribute und Methoden einer anderen Klasse erbt, deren Attribute und Methoden also selbst aufweist. Darüber hinaus kann sie aber auch noch eigene, nicht geerbte Attribute und Methoden aufweisen. So können sich komplexe Klassenhierarchien ergeben, in denen die verschiedenen Klassen eingeordnet sind. Je weiter oben in einer solchen Klassenhierarchie eine Klasse steht, desto allgemeiner ist sie; je weiter unten sie steht, desto spezieller ist sie. Wenn in der Klassenhierarchie keine weiteren Klassen zwischen einer ersten Klasse und einer von dieser abgeleiteten zweiten Klasse stehen, gilt die zweite Klasse als von der ersten direkt abgeleitet. Von allen weiter oben in der Klassenhierarchie angesiedelten Klassen, deren Attribute und Methoden sie mittelbar ebenfalls geerbt hat, ist sie indirekt abgeleitet. Für jede Instanz einer Klasse gilt, dass sie auch Instanz aller Klassen ist, von denen ihre zugehörige Klasse direkt oder indirekt abgeleitet wurde. Sie weist auch alle Attribute und Methoden dieser Klassen auf, deren Instanz sie indirekt ist.

Die Anwendung solcher objektorientierter Ansätze bietet sich überall dort an, wo reale Gegenstände und Zusammenhänge in ein Modell abgebildet werden sollen. Diese Notwendigkeit tritt vor allem bei der Abbildung technischer Vorgänge auf.

Relationale Datenbankmanagementsysteme gehören seit langem zum Stand der Technik. In diesen werden Datenbanken verwaltet, die die Ablage von Daten in Tabellen erlauben, wobei diese Tabellen Spalten und Zeilen aufweisen. Die Begriffe "Zeilen" und "Spalten" dürfen dabei allerdings nicht dahingehend interpretiert werden, dass Zeilen tatsächlich untereinander und Spalten nebeneinander angeordnet sind. Stattdessen ist ebenso eine Darstellung mit untereinander angeordneten und sich horizontal erstreckenden Spalten und nebeneinander angeordneten und sich vertikal erstreckenden Zeilen denkbar. Im Kontext relationaler Datenbanken sind die Begriffe dahingehend zu interpretieren, dass die Spalten die Träger der Attribute eines jeden Datensatzes sind, der in der Datenbank abgelegt ist, während die Zeilen jeweils einen Datensatz mit besagten Attributen aufnehmen können.

Eine relationale Datenbank kann beliebig viele Tabellen aufweisen. Eine Abfrage einer solchen relationalen Datenbank kann sich auf mehrere solche Tabellen gleichzeitig beziehen und dabei vorgeben, wie diese Tabellen zum Zweck der Abfrage miteinander verknüpft werden sollen.

Darüber hinaus erlauben viele relationale Datenbankmanagementsysteme noch die Erzeugung von Sichten. Bei diesen handelt es sich um virtuelle Tabellen, die keine eigenen Daten enthalten, sondern stattdessen auf Daten anderer Tabellen verweisen. Die Art der Abfrage von Daten aus der Datenbank ist allerdings nicht davon abhängig, ob auf eine Tabelle oder eine Sicht zugegriffen wird.

Als Abfragesprache für relationale Datenbankmanagementsysteme findet zumeist SQL (Structured Query Language) Anwendung. Quasi alle gängigen relationalen Datenbankmanagementsystem erlauben einen Zugriff auf die Daten der Datenbanken per SQL. Obwohl relationale Datenbankmanagementsysteme sowie SQL als Abfragesprache schon verhältnismäßig alt sind, werden sie nach wie vor häufig verwendet, da die Abfragesprache genormt ist und es auf ihr basierende standardisierte Programmierschnittstellen gibt. Darüber hinaus verbinden relationale Datenbanken eine recht einfache und auch für Laien nachvollziehbare Ablage der Daten mit sehr mächtigen Abfragemöglichkeiten mittels des flexiblen Verknüpfens von Tabellen zur Datenabfrage.

Neben relationalen Datenbankmanagementsystemen existieren auch objektorientierte Datenbankmanagementsysteme. Solche objektorientierten Datenbankmanagementsysteme sind dafür ausgelegt, Klassen und deren Instanzen aufzunehmen. Sie haben allerdings bislang, gemessen an der Zahl der relationalen Datenbankmanagementsystemen, nur eine geringe Verbreitung gefunden. Ihrer Verwendung steht vor allem das Fehlen einer einheitlichen Abfragesprache entgegen.

In der Praxis stellt sich das Problem, wie die in Form von Instanzen und deren Attributen vorliegenden Daten einer Anwendung in einer Datenbank abgelegt werden können, um die Daten bei späteren Programmläufen wieder verfügbar zu haben. Diese sogenannte Persistenz von Objekten ist zum einen über die Verwendung von objektorientierten Datenbanken zu erreichen. Allerdings spricht vieles gegen eine solche Lösung, nicht zuletzt die weite Verbreitung relationaler Datenbankmanagementsysteme und deren genormte Abfragesprache, die eine Ablage in einer Datenbank eines solchen relationalen Datenbankmanagementsystems wünschenswert erscheinen lassen.

Die für eine Ablage von Klassen und Instanzen dieser Klassen in einem relationalen Datenbankmanagementsystem bislang beschrittenen Wege umfassen folgende Möglichkeiten:
Eine erste Möglichkeit besteht darin, eine objektorientierte Erweiterung eines relationalen Datenbankmanagementsystems zu nutzen. Allerdings sind solche Erweiterungen in aller Regel herstellerspezifisch und damit an ein bestimmtes relationales Datenbankmanagementsystem gebunden. Darüber hinaus entfällt die Möglichkeit, über eine standardisierte Abfragesprache auf die abgelegten Daten zuzugreifen. Damit ist eine einmal getroffene Entscheidung bezüglich eines relationalen Datenbankmanagementsystems nur noch schwer revidierbar, da eine solche Änderung mit der Anpassung der auf die Datenbank zugreifenden Programme an eine andere proprietäre Abfragesprache einhergeht.

Eine zweite Möglichkeit besteht darin, die abzulegenden Daten in eine Binärform zu konvertieren, die binären Daten in entsprechenden Feldern von Datenbanktabellen abzulegen und diese Felder bei Bedarf wieder auszulesen, um anschließend die Daten wieder in die entsprechenden Instanzen zurück zu konvertieren. Diese Möglichkeit hat eine Vielzahl gravierender Schwächen. So geht die Möglichkeit, Daten aus der Datenbank mit einem der vielen verfügbaren Abfragewerkzeuge abzufragen verloren, da die Binärdaten ohne Konvertierung nicht interpretierbar sind. Damit ist der wesentliche Vorteil der relationalen Datenbank nicht nutzbar. Darüber hinaus gestattet diese Möglichkeit auch keinen gezielten Zugriff auf einzelne Attribute von Instanzen, ohne diese vorher in Form der binären Daten aus der Datenbank abzufragen und sie dann innerhalb der Anwendung zurückzukonvertieren.

Eine dritte Möglichkeit besteht darin, die Klassen und Instanzen dieser Klassen so abzulegen, dass für eine jede Klasse eine Datenbanktabelle erzeugt wird, die geeignete Spalten aufweist, um die Attribute der Klasse aufnehmen zu können. Für jede einzelne Instanz einer solchen Klasse wird ein Datensatz in dieser Tabelle angelegt. Nachteil dieser Möglichkeit ist, dass die Vererbungsbeziehungen zwischen den Klassen nicht in der Datenbank abgebildet werden. Dies hat zur Folge, dass die Datenbank nur zusammen mit einem in der Applikation abgelegten Datenmodell eine eindeutige Interpretation der abgelegten Daten erlaubt. Die Struktur der in der Datenbank abgelegten Daten an sich ist nicht eindeutig. Darüber hinaus kommt als problematischer Aspekt hinzu, dass die Abfrage von Instanzen einer Klasse in vielen unterschiedlichen Tabellen erfolgen muss und die Anzahl der Abfragen dementsprechend steigt. Da Instanzen einer von einer Klasse A abgeleiteten Klasse B sowohl Instanzen dieser Klasse B als auch Instanzen der Klasse A sind, würde es eine Abfrage aller Instanzen der Klasse A erforderlich machen, die Tabellen der Klasse A sowie aller abgeleiteter Klassen einzeln mittels separater Datenbankabfragen zu durchsuchen.

Ein Verfahren zum Abspeichern von Instanzen von Klassen einer Klassenhierarchie ist dem US-Patent 5,291,583 zu entnehmen. Bei dem dort vorgeschlagenen Verfahren werden Tabellen in einer Datenbank erstellt, die jeweils einer Klasse zugeordnet werden. Diese Tabellen weisen Spalten auf, die die Attribute der Klasse repräsentieren und Zeilen, die jeweils einer Instanz der Klasse zugeordnet sind. Dabei werden in Tabellen von abgeleiteten Klassen nur Spalten für jene Attribute vorgesehen, die der Klasse zueigen sind und nicht geerbt wurden. Instanzen einer abgeleiteten Klasse werden dementsprechend durch Datensätze in der Tabelle der entsprechenden Klasse selbst sowie in den Tabellen der unmittelbaren und mittelbaren Elternklassen dieser Klasse abgelegt. Als nachteilig wird dabei angesehen, dass somit das Auslesen einer Instanz eine Vielzahl von Leseoperationen erfordern kann und dass die Konsistenz der abgelegten Daten gefährdet ist, wenn beispielsweise während der mehreren zur Ablage einer Instanz erforderlichen Datenbankzugriffe eine Störung im System auftritt. Dieser Gefahr der gestörten Konsistenz der in der Datenbank abgelegten Daten muss mit zusätzlichen Sicherheitsmaßnahmen begegnet werden.

Mit der Erfindung soll ein Verfahren geschaffen werden, welches die Abbildung eines durch eine Klassenhierarchie modellierten technischen Systems in einem relationalen Datenbankmanagementsystem erlaubt, wobei das Datenmodell in seiner Gesamtheit abgebildet wird, so dass der Zugriff auf diese Daten mit nicht für das Datenmodell angepassten Werkzeugen möglich ist. Mit dem Verfahren soll es möglich sein, Zugriff auf alle Instanzen einer Klasse mit nur einer Datenbankabfrage zu haben, statt diese Abfrage in der Tabelle der betroffenen Klasse und aller von dieser Klasse direkt oder indirekt abgeleiteten Klasse durchführen zu müssen. Darüber hinaus sollen die im relationale Datenbankmanagementsystem abgelegten Daten beim Verlust einzelner Datensätze ihre Konsistenz bewahren.

Erfindungsgemäß ist hierzu ein Verfahren zum Abbilden eines durch eine Hierarchie mit mehreren Klassen modellierten technischen Systems in eine relationale Datenbank vorgesehen, wobei Instanzen dieser Klassen existieren können und wobei jeder Klasse Attribute zugeordnet sein können, wobei in einem ersten Schritt für jede Klasse der Klassenhierarchie jeweils eine Tabelle erzeugt wird, in der Instanzen der Klasse mit den zugeordneten abzulegenden Attributen der Klasse als einzelne Datensätze ablegbar sind, und in einem zweiten Schritt eine Sichterzeugungsregel für jede Klasse von der in der Klassenhierarchie wenigstens eine Klasse abgeleitet wurde, abgespeichert wird, wobei eine zu dieser Sichterzeugungsregel gehörende Sicht alle Instanzen der zugeordneten Klasse sowie alle Instanzen der von ihr abgeleiteten Klassen als Datensätze enthält, wobei die Datensätze der Sicht einer Klasse sich zusammensetzen aus den Datensätzen der Tabelle dieser Klasse sowie aus den Tabellen oder Sichten der direkt von dieser Klasse abgeleiteten Klassen.

In der sich ergebenden Struktur der Datenbank existiert für jede Klasse jeweils eine Tabelle und für jene Klassen, von denen andere Klassen abgeleitet wurden, zusätzlich eine Sicht. Die Tabelle einer Klasse enthält nur die direkt von dieser Klasse erzeugten Instanzen, während die Sicht der Klasse alle Instanzen der Klasse enthält, sowohl die direkt von der Klasse selbst erzeugten als auch die von abgeleiteten Klassen erzeugten. Dabei ist die Sicht allerdings im Datenbankmanagementsystem nur in Form einer Sichterzeugungsregel abgelegt, die besagt, nach welchen Kriterien Datensätze Teil dieser Sicht sein sollen. Dementsprechend ist der Speicherbedarf gering und unabhängig davon, wie viele Datensätze die Sicht aufweist. Diese Struktur ermöglicht sehr einfache Abfragen bezüglich der Daten der Instanzen der Klassen. Da für jede Klasse, von der andere Klassen abgeleitet wurden, die Instanzen dieser Klasse zusammen mit den Instanzen aller direkt und indirekt von dieser Klasse abgeleiteten Klassen in einer Sicht zusammengeführt vorliegen, ist eine Abfrage im Sinne der Objektorientierung sehr einfach möglich. Es ist nicht erforderlich, aus den einzelnen Tabellen der verschiedenen Klassen alle Instanzen separat abzufragen, was einen deutlich höheren Aufwand darstellen würde. Darüber hinaus entfällt die Erfordernis, dass die anfragende Anwendung oder der Bediener, der mit einem Standard-Werkzeug auf die Datenbank zugreift, Kenntnis davon hat, welche Klassen von der Klasse, deren Instanzen abgefragt werden sollen, abgeleitet wurden. Je nach Anwendungszweck ist es möglich, die Klassenhierarchie in der Datenbank zu erweitern, ohne dass die Anwendung entsprechend angepasst werden müsste. Dies führt zu einem reduzierten Administrationsaufwand und zur Vermeidung fehlerträchtiger Redundanzen. Denkbar sind Anwendungen, die so eine Darstellung und Verarbeitung beliebiger in einer Datenbank abgelegter Klassenhierarchien gestatten, ohne dass die Anwendungen selbst Informationen über diese Klassenhierarchien aufweisen. In der Datenbank sind alle die Klassenhierarchie kennzeichnenden Informationen enthalten und aus ihr abfragbar. Ohne das erfindungsgemäße Verfahren würde die Anforderung, auf alle Instanzen einer Klasse inklusive aller Instanzen der von ihr abgeleiteten Klasse mit nur einer Datenbankanfrage zugreifen zu können, kaum erfüllbar sein.

Die Definition der Sichten, die dazu führt, dass die Sicht die Datensätze der Tabelle der zugeordneten Klasse sowie die Datensätze der Tabellen bzw. Sichten der direkt abgeleiteten Klassen umfasst, führt zu einer sehr leichten Administrierbarkeit der Datenbank im Falle, dass eine neue Klasse hinzugefügt oder eine bestehende entfernt wird. Es muss nur die Sicht beziehungsweise Sichterzeugungsregel der Klasse verändert werden, von der die entfernte Klasse abgeleitet war bzw. die neue Klasse abgeleitet wird, so dass die Anzahl der erforderlichen Schreibzugriffe minimiert ist. Die Sichten aller in der Klassenhierarchie oberhalb dieser Klasse liegenden Klassen können unverändert bleiben, da ihre Daten nicht direkt aus der Tabelle der entfernten bzw. neu erstellten stammen, sondern stattdessen aus den Sichten bzw. Tabellen der direkt abgeleiteten Klassen. Im Falle der Abfrage von Daten durchläuft die Abfrage also rekursiv die Klassenhierarchie, wobei die Sichten einer jeden Klasse immer nur auf die zur gleichen Klasse gehörigen Tabelle und auf die Tabellen bzw. Sichten der direkt abgeleiteten Klasse verweisen.

Als technisches System wird dabei ein in der Realität existierendes System bezeichnet, beispielsweise eine Maschine, ein Netzwerk, ein biologisches System oder Teilsystem, allgemein eine größere Zahl an Komponenten oder Gegenständen, die in bestimmter Beziehung zueinander stehen.

In einer Weiterbildung der Erfindung stammen die von abgeleiteten Klassen stammenden Datensätze in der Sicht einer Klasse bei abgeleiteten Klassen aus der Sicht dieser abgeleiteten Klasse, sofern von der abgeleiteten Klasse selbst mindestens eine weitere Klasse abgeleitet ist, und bei abgeleiteten Klassen aus der Tabelle dieser abgeleiteten Klasse, sofern von der abgeleiteten Klasse keine weiteren Klassen abgeleitet sind.

In Weiterbildung der Erfindung ist das Verfahren dadurch gekennzeichnet, dass in einem dritten Verfahrensschritt eine Sichterzeugungsregel für jede Klasse, von der in der Klassenhierarchie keine Klasse abgeleitet wurde, abgespeichert wird, wobei eine zu dieser Sichterzeugungsregel gehörende Sicht alle Instanzen der zugeordneten Klasse enthält, und dass die Datensätze der Sichten einer jeden Klasse sich zusammensetzen aus den Datensätzen der Tabelle dieser Klasse sowie aus den Sichten der direkt von dieser Klasse abgeleiteten Klassen.

Dies bietet den Vorteil, dass für eine Abfrage von Instanzen einer Klasse nicht bekannt sein muss, ob von dieser Klasse andere Klassen abgeleitet wurden, um zu entscheiden, ob sich die Abfrage auf die Sicht oder auf die Tabelle der Klasse beziehen muss. Die Abfrage erfolgt stattdessen stets bezogen auf die Sicht. Im Falle, dass von der betreffenden Klasse keine anderen Klassen abgeleitet wurden, enthält diese Sicht lediglich den Inhalt der zur Klasse gehörigen Tabelle. Der Inhalt der Sicht einer jeden Klasse setzt sich dementsprechend aus dem Inhalt der zur Klasse zugehörigen Tabelle und den Sichten der von der Klasse direkt abgeleiteten Klasse zusammen. Bei dieser Ausführungsform werden für die zugehörige Sicht nur die Sichten der direkt abgeleiteten Klassen berücksichtigt. Die Sichten der indirekt abgeleiteten Klassen, die dementsprechend weiter unten in der Klassenhierarchie liegen, werden nur mittelbar durch Rekursion berücksichtigt.

In Weiterbildung der Erfindung weisen die Tabellen der direkt abgeleiteten Klassen in Form von Spalten wenigstens alle Attribute der Klassen auf, von denen diese abgeleiteten Klassen jeweils abgeleitet wurden.

Auf diese Weise kann die Logik der Vererbung bei der Abbildung berücksichtigt werden, bei der Klassen stets alle Attribute jener Klasse erben, von der sie abgeleitet wurden. Für das Ergebnis einer Datenbankanfrage, welches aus einer Vielzahl von aus verschiedenen Tabellen stammenden Instanzen bestehen kann, heißt das, dass alle diese Instanzen wenigstens die Attribute der Klasse aufweisen, auf deren Tabelle sich die Datenbankanfrage bezog.

In Weiterbildung der Erfindung werden in die Sicht einer jeweiligen Klasse nur diejenigen Attribute abgebildet, die auch in der Tabelle der Klasse abgebildet sind.

Auch dadurch kann die Logik der Vererbung berücksichtigt werden, bei der sowohl die Instanzen, die direkt von einer Klasse erzeugt wurden, als auch jene Instanzen, die von einer von der Klasse abgeleiteten Klasse erzeugt wurden, Instanzen der Klasse sind. Da diese Ursprungsklasse aber nicht notwendigerweise alle Attribute der abgeleiteten Klassen aufweist, von denen Instanzen erzeugt wurden, können die Instanzen dieser abgeleiteten Klassen nur mit jenen Attributen in die Sicht aufgenommen werden, die die ableitende Klasse selbst auch aufweist.

In Weiterbildung der Erfindung wird jede abgelegte Instanz in ihrer Tabelle mit einer eindeutigen Kennung versehen und diese eindeutige Kennung der Instanz ist auch in den Sichten aufgeführt, die diese Instanz enthalten.

Eine solche Kennung gestattet den gezielten Zugriff auf einen einzelnen Datensatz, der eine bestimmte Instanz enthält. Der Verzicht auf eine solche eindeutige Kennung ist problematisch, wenn in einer Datenbanktabelle identische Datensätze vorhanden sind, die mangels in einer Datenbankabfrage benennbarer Unterschiede nicht gezielt und separat manipuliert werden können.

In Weiterbildung der Erfindung ist in jeder durch eine Sichterzeugungsregel definierten Sicht eine Spalte vorgesehen, in der für jeden Datensatz eine Information über die Tabelle abgelegt wird, aus der der Datensatz stammt.

Eine solche Spalte erlaubt es, als Ergebnis einer Datenbankanfrage über die reinen Instanzen mit ihren jeweiligen Attributen hinaus, für jede im Ergebnis enthaltene Instanz eine Information zu erhalten, welches die tiefste Klasse der Klassenhierarchie ist, um deren Instanz es sich handelt. Diese Information ermöglicht es, die Instanz direkt aus der Tabelle dieser Klasse abzufragen und damit auch die Attribute als Ergebnis zu erhalten, die nicht Teil der ersten Datenbankabfrage waren, da die Tabelle der Klasse, auf die die erste Datenbankabfrage gerichtet war, für dieses Attribut keine Spalte enthält.

In Weiterbildung der Erfindung handelt es sich bei der abgelegten Information über die Tabelle um den Namen der Klasse, aus der der Datensatz stammt, und/oder um den Namen der zugehörigen Tabelle der Klasse.

Diese beiden Möglichkeiten stellen die einfachsten Wege dar, mit denen der Zugriff auf den Datensatz einer bestimmten Instanz und deren Attribute möglich ist. Wenn es sich bei der Information um den Tabellennamen handelt, kann dieser Zugriff direkt erfolgen, ohne dass noch aus der Information Rückschlüsse auf den Namen der Tabellen gezogen werden müssen. Ähnlich einfach ist es beim Namen der Klasse, sofern dieser einen direkten Rückschluss auf den Namen der Tabelle zulässt, beispielsweise dadurch, dass er mit dem Namen der Tabelle identisch ist oder sich der Tabellenname aus dem Klassennamen durch einfaches Voranstellen eines "T-" oder ähnlichem ergibt.

Das Auslesen von Informationen aus einer mit dem erfindungsgemäßen Verfahren in einer relationalen Datenbank abgebildeten Klassenhierarchie erfolgt mittels eines ersten Schritts, bei dem aus der Sicht einer Klasse alle Instanzen dieser Klasse und der von ihr direkt oder indirekt abgeleiteten Klassen ermittelt werden, die vorgegebenen Kriterien entsprechen, und eines zweiten Schritts, bei dem die im ersten Schritt ermittelten Instanzen aus den Tabellen ihrer jeweiligen Klasse mit allen benötigten Attributen abgefragt werden.

Dieses Vorgehen ermöglicht es, in einem ersten Schritt für eine gegebene Klasse alle Instanzen dieser Klasse und der von ihr direkt oder indirekt abgeleiteten Klassen zu ermitteln, die eine gegebene Abfragebedingung erfüllen. Eine solche Abfragebedingung kann entfallen, sofern alle Instanzen der Klasse und ihrer abgeleiteten Klasse ermittelt werden sollen. Die ermittelten Instanzen werden vom Datenbankmanagementsystem in Form einzelner Datensätze zurückgegeben, wobei je nach Formulierung der Abfrage jeder Datensatz mit den Attributen der abgefragten Klasse sowie einer eindeutigen Kennung und einer Information über die Tabelle, in der sich der Datensatz befindet, ausgestattet ist. Über diese beiden Informationen, die eindeutige Kennung und die Information über die Tabelle, ist es dann im zweiten Schritt des Vorgehens möglich, den Datensatz aus seiner Tabelle auszulesen und dabei auch alle Attribute zu erhalten, die die zur Tabelle zugehörige Klasse aufweist.

Das der Erfindung zugrunde liegende Problem wird auch durch ein digitales Speichermedium gelöst, insbesondere eine Diskette, mit elektronisch auslesbaren Steuersignalen, die so mit einem programmierbaren Computersystem zusammenwirken können, dass das erfindungsgemäße Verfahren ausgeführt wird.

Weitere Merkmale und Vorteile der Erfindung ergeben sich aus den Ansprüchen und der Beschreibung bevorzugter Ausführungsformen der Erfindung im Zusammenhang mit den Zeichnungen. In den Zeichnungen zeigen:
- Fig. 1: eine Datenbankstruktur einer ersten Klassenhierarchie mit drei Klassen, wie sie sich aus dem erfindungsgemäßen Verfahren gemäß einer ersten Ausführungsform mit zwei Verfahrensschritten ergibt, und
- Fig. 2: eine Datenbankstruktur der Klassenhierarchie aus Fig. 1, wie sie sich aus dem erfindungsgemäßen Verfahren gemäß einer zweiten Ausführungsform mit drei Verfahrensschritten ergibt, und
- Fig. 3: eine Datenbankstruktur einer zweiten Klassenhierarchie mit drei Klassen, wie sie sich aus dem erfindungsgemäßen Verfahren gemäß der zweiten Ausführungsform mit drei Verfahrensschritten ergibt.

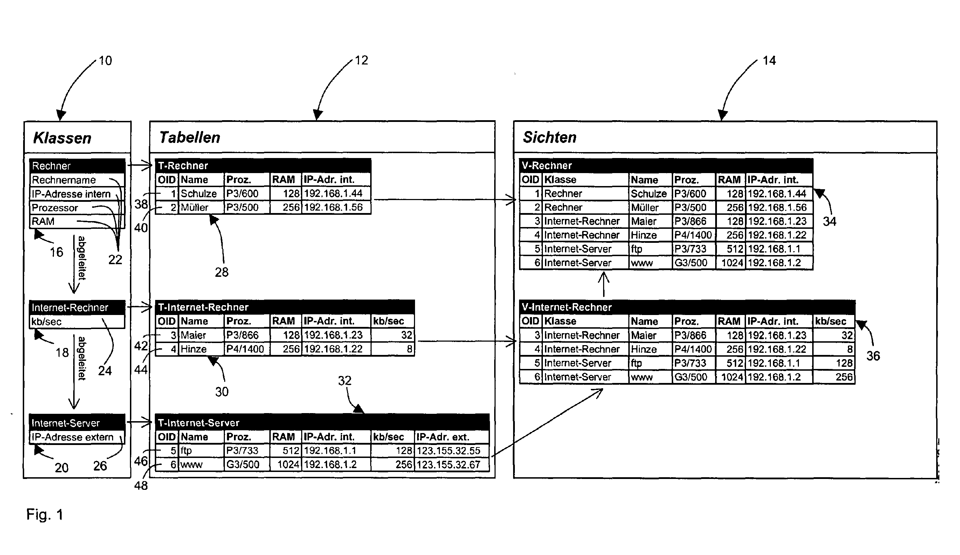

Fig.1 zeigt eine Klassenhierarchie 10 und eine auf Basis dieser Klassenhierarchie 10 mittels des erfindungsgemäßen zweischrittigen Verfahrens gemäß einer ersten Ausführungsform erzeugte Struktur einer Datenbank, die sich aus Tabellen 12 und Sichten 14 zusammensetzt. Die Klassenhierarchie 10 weist insgesamt drei Klassen 16, 18, 20 auf drei Hierarchiestufen auf und bildet Rechner eines Netzwerkes in die Datenbank ab. Eine Klasse 16 ist die oberste der drei Klassen 16, 18, 20 in der Klassenhierarchie. Sie trägt den Namen "Rechner" und verfügt über Attribute 22, die für Rechner charakteristisch sind: "IP-Adresse intern", "Prozessor" und "RAM".

Von dieser Klasse 16 "Rechner" abgeleitet ist eine zweite Klasse 18 mit dem Namen "Internet-Rechner". Sie ist für die Aufnahme von Instanzen geschaffen, die Rechner des Netzwerks mit einer Netzwerkverbindung ins Internet repräsentieren. Zusätzlich zu den direkt von der Klasse 16 "Rechner" geerbten Attributen 22 verfügt sie über ein weiteres Attribut 24 "kb/sec", welches Auskunft über die Geschwindigkeit der Anbindung zum Internet gibt.

Von dieser zweiten Klasse 18 "Internet-Rechner" ist eine dritte Klasse 20 "Internet-Server" abgeleitet. Diese Klasse 20 "Internet-Server" verfügt über die direkt und indirekt geerbten Attribute 22, 24 der Klasse 16 "Rechner" sowie der Klasse 20 "Internet-Rechner" und hat darüber hinaus noch ein weiteres Attribut 26 "IP-Adresse extern", welches angibt, über welche IP-Adresse ein Server vom Internet aus erreichbar ist.

Für alle drei Klassen 16, 18, 20 "Rechner", "Internet-Rechner" und "Internet-Server" sind erfindungsgemäß Tabellen 28, 30, 32 in der relationalen Datenbank vorgesehen, deren Namen jeweils aus den Zeichen "T-" und dem Namen der jeweils zugeordneten Klasse 16, 18, 20 "Rechner", "Internet-Rechner" und "Internet-Server" zusammengesetzt sind. Die Spalten dieser Tabellen 28, 30, 32 "T-Rechner", "T-Internet-Rechner" und "T-Internet-Server" haben die Attribute der ihnen jeweils zugrunde liegenden Klassen 16, 18, 20 "Rechner", "Internet-Rechner" und "Internet-Server" als Spalten, wobei es sich jeweils um die eigenen sowie die geerbten Attribute handelt. Die Tabelle 28 "T-Rechner" hat als Spalten die Attribute 22 der Klasse 16 "Rechner", die Tabelle 30 "T-Internet-Rechner" hat als Spalten die Attribute 22, 24 der Klassen 16, 18 "Rechner" sowie "Internet-Rechner" und die Tabelle 32 "T-Internet-Server" hat als Spalten die Attribute 22, 24, 26 der Klassen 16, 18, 20 "Rechner", "Internet-Rechner" und "Internet-Server". Darüber hinaus weisen alle drei Tabellen 28, 30, 32 "T-Rechner", "T-Internet-Rechner" und "T-Internet-Server" jeweils eine Spalte "OID" auf, in der für jede Instanz in Form eines Datensatzes der Tabellen 28, 30, 32 "T-Rechner", "T-Internet-Rechner" und "T-Internet-Server" eine eindeutige Kennung mit abgelegt werden kann.

Für die beiden Klassen 16, 18 "Rechner" und "Internet-Rechner", von denen jeweils mindestens eine Klasse abgeleitet ist, existiert darüber hinaus noch jeweils eine Sicht 34, 36, die jeweils den Namen der zugehörigen Klasse 16, 18 mit einem vorangestellten "V-" (View) trägt. Die Spalten dieser Sichten 34, 36 "V-Rechner" und "V-Internet-Rechner" entsprechen den Spalten der Tabellen 28, 30 "T-Rechner" und "T-Internet-Rechner" der jeweiligen Klassen 16, 18 "Rechner" und "Internet-Rechner", ergänzt um eine weiter Spalte "Klasse", in der für jeden Datensatz in den Sichten 34, 36 "V-Rechner" und "V-Internet-Rechner" abgelegt wird, aus der Tabelle welcher Klasse 16, 18, 20 "Rechner", "Internet-Rechner" oder "Internet-Server" dieser stammt.

Für jede der drei Klassen 16, 18, 20 "Rechner", "Internet-Rechner", "Internet-Server" existieren jeweils zwei Instanzen der zugehörigen Klasse, die jeweils als Datensätze in der zugehörigen Tabelle abgelegt sind: Die Tabelle 16 "T-Rechner" enthält zwei Datensätze 38, 40, die Tabelle 18 "T-Internet-Rechner" enthält zwei Datensätze 42, 44 und die Tabelle 20 "T-Internet-Server" enthält zwei Datensätze 46, 48.

Eine Sichterzeugungsregel der Sicht 36 "V-Internet-Rechner" ist so definiert, dass diese zum einen die Instanzen der Klasse 18 "Internet-Rechner" aus der Tabelle 30 "T-Internet-Rechner" und zum anderen die Instanzen der Klasse 20 "Internet-Server" aus der Tabelle 32 "T-Internet-Server" der von der Klasse 18 "Internet-Rechner" abgeleiteten Klasse 20

"Internet-Server" übernimmt. Dementsprechend enthält die Sicht 36 "V-Internet-Rechner" insgesamt vier Datensätze 42, 44, 46, 48 wobei diese in der Sicht 36 "V-Internet-Rechner" in einer Spalte "Klasse" um die Information ergänzt sind, aus der Tabelle welcher Klasse sie jeweils stammen. Es werden dabei aber nur jene Spalten der Datensätze 42, 44, 46, 48 übernommen, die in der Sicht 36 "V-Internet-Rechner" vorhanden sind, d.h. dass bei den Datensätzen 46, 48 aus der Tabelle "T-Internet-Server" die Spalte für das Attribut 26 "IP-Adresse extern" entfällt, da die Klasse 18 "Internet Rechner" dieses Attribut und damit die Sicht 36 "V-Internet-Rechner" eine dafür vorgesehene Spalte nicht aufweisen.

Die Sichterzeugungsregel der Sicht 34 "V-Rechner" ist so definiert, dass diese zum einen die Datensätze 38, 40 der Instanzen der Klasse 16 "Rechner" aus der Tabelle 28 "T-Rechner" und zum anderen die Datensätze 42, 44, 46, 48 der Instanzen der direkt und indirekt abgeleiteten Klassen 18, 20 "Internet-Rechner" und "Internet-Server" aus der Sicht 36 "V-Internet-Rechner" der direkt abgeleiteten Klasse 18 "Internet-Rechner" übernimmt. Auch diese Sicht 34 "V-Rechner" verfügt über eine Spalte "Klasse", in der für jeden Datensatz abgelegt wird, aus der Tabelle welcher Klasse er stammt. Darüber hinaus weisen die Datensätze in der Sicht 34 "V-Rechner" wiederum nur jene Spalten auf, die die Tabelle 28 "T-Rechner" auf Grundlage der Klasse 16 "Rechner" aufweist. Damit verfügen die Datensätze 42, 44, 46, 48, die aus der Sicht 36 "V-Internet-Rechner" stammen, in der Sicht 34 "V-Rechner" nicht mehr über das Attribut 24 "kb/sec", da die Klasse 16 "Rechner" kein entsprechendes Attribut aufweist.

Der beschriebene Aufbau gestattet es, dass durch eine beispielsweise auf die Sicht 34 "V-Rechner" gerichtete Abfrage ein Zugriff auf die Datensätze aller Instanzen der Klassen 16, 18, 20 "Rechner", "Internet-Rechner" und "Internet-Server" erfolgt. Eine entsprechende SQL-Abfrage, um alle Rechner mit mehr als 128MB Speicher zu erhalten, könnte "SELECT OID, Klasse FROM V-Rechner WHERE RAM>128" lauten. Die relationale Datenbank würde als Abfrageergebnis die insgesamt vier Datensätze 40, 44, 46, 48 zurückliefern. Zu jedem dieser Datensätze würde die OID und die Klasse zurückgeliefert, so dass bei Bedarf aus den jeweiligen Tabellen der entsprechende Datensatz mit allen Attributen, also auch jenen, die als Spalten in der Sicht 34 "V-Rechner" nicht enthalten sind, abgefragt werden könnte. Eine entsprechende SQL-Abfrage mit dem Ziel, alle Informationen des Datensatzes 48 zu erhalten, würde "SELECT * FROM T-Internet-Server WHERE OID=2" lauten. Dabei würden die beiden durch die erste SQL-Abfrage bezüglich des Datensatz 48 gelieferten Informationen Klasse "Internet-Server" und OID "2" genutzt.

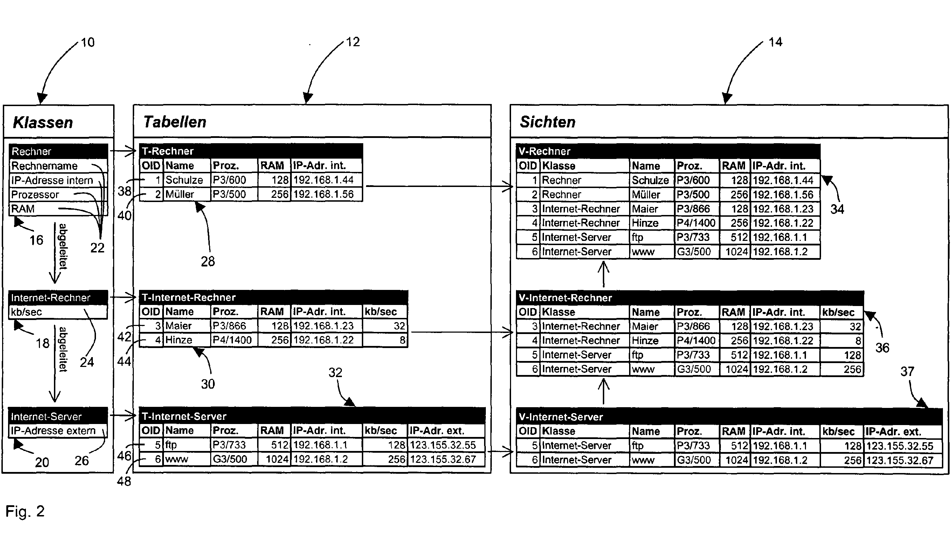

Fig. 2 zeigt eine mit Fig. 1 im wesentlichen identische Konstellation, die gemäß der zweiten Ausführungsform der Erfindung erzeugt wurde. Wiederum handelt es sich um drei Klassen 16, 18, 20 "Rechner", "Internet-Rechner" und "Internet-Server", zu denen zugehörig jeweils eine Tabelle 28, 30, 32 "T-Rechner", "T-Internet-Rechner" und "T-Internet-Server" existiert, wobei in der Tabelle 28 "T-Rechner" in Form der Datensätze 38, 40 die Instanzen der Klasse 16 "Rechner", in der Tabelle 30 "T-Internet-Rechner" in Form der Datensätze 42, 44 die Instanzen der Klasse 18 "Internet-Rechner" und in der Tabelle 32 "T-Internet-Server" in Form der Datensätze 46, 48 die Instanzen der Klasse 20 "Internet-Server" abgelegt sind.

Abweichend von der in Fig. 1 dargestellten Datenbank enthält die hier dargestellte Datenbank zusätzlich zu den den Klassen 16 "Rechner" und 18 "Internet-Rechner" zugeordneten Sichten 34, 36 "V-Rechner" und "V-"Internet-Rechner" auch für die Klasse 20 "Internet-Server" eine Sicht 37 namens "V-Internet-Server", die im Zuge eines dritten Verfahrensschritts erzeugt wurde. Es existiert also für jede Klasse 16, 18, 20 "Rechner", "Internet-Rechner" und "Internet-Server" eine jeweils eigene Sicht, unabhängig davon, ob von der Klasse andere Klassen abgeleitet sind. Die Sicht 37 "V-Internet-Server", die somit zusätzlich zu den schon in Fig. 1 dargestellten Sichten 34, 36 "V-Rechner" und "V-Internet-Rechner" angelegt ist, enthält allerdings nur die in der Tabelle 32 "T-Internet-Server" enthaltenen Datensätze. Darüber hinaus ändert sich der Aufbau der Datenbank gegenüber der in Fig. 1 dargestellten Datenbank dahingehend, dass die Sicht 34 "V-Internet-Rechner" keine Datensätze mehr direkt von der Tabelle 32 "T-Internet-Server" erhält, sondern deren Datensätze stattdessen mittelbar über die Sicht 37 "V-Internet-Server" erhält. Dies führt zu einheitlichen Sichterzeugungsregeln aller Sichten 34, 36, 37 der Datenbank "V-Rechner", "V-Internet-Rechner" und "V-Internet-Server", da die zur Klasse der jeweiligen Sicht gehörende Tabelle die einzige Tabelle ist, aus der die Sicht Datensätze erhalten muss. Alle aus abgeleiteten Klassen übernommene Instanzen in Form von Datensätzen stammen aus den zu diesen Klassen gehörenden Sichten. Darüber hinaus ist dieses der Fig. 2 zugrunde liegende Verfahren mit einem dritten Verfahrensschritt auch deshalb besonders zweckmäßig, da ein Bediener für eine Datenbankabfrage, die auf eine bestimmte Klasse gerichtet ist, keine Kenntnis darüber haben muss, ob von der Klasse andere Klassen abgeleitet wurden. Im Falle der in der Fig. 1 dargestellten Datenbank braucht er diese Kenntnis, um zu entscheiden, ob die Abfrage auf die Tabelle oder die Sicht der betreffenden Klasse gerichtet sein muss.

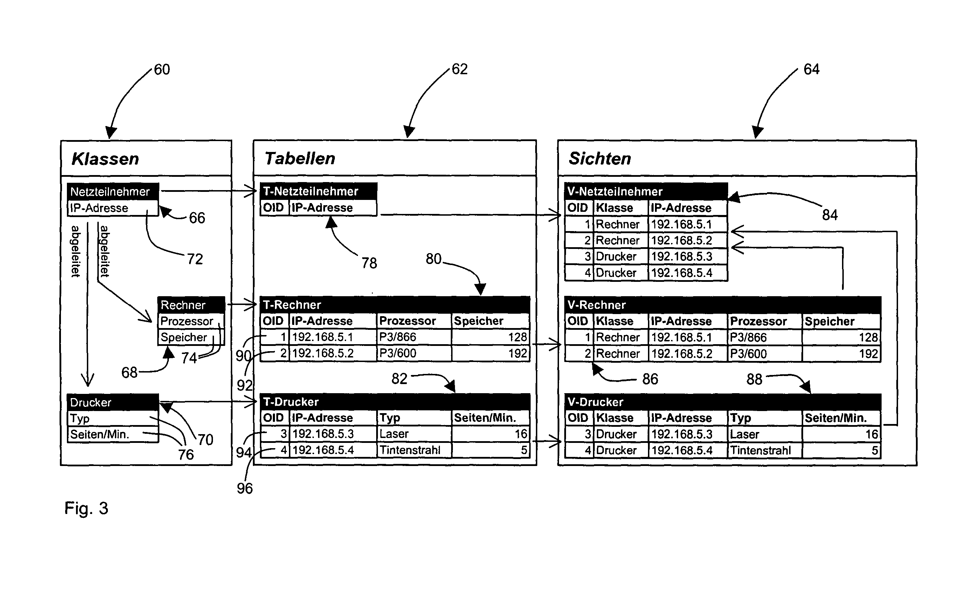

Fig. 3 zeigt wiederum eine mittels des erfindungsgemäßen Verfahrens der zweiten Ausführungsform erzeugte Datenbank, wobei die dieser Datenbank zugrunde liegende Klassenstruktur anders als die Klassenstruktur aus Fig. 1 und Fig. 2 aufgebaut ist.

Dargestellt sind eine Klassenhierarchie 60 sowie die sich erfindungsgemäß ergebende Struktur einer Datenbank mit Tabellen 62 und Sichten 64. Inhaltlich bildet die Klassenhierarchie wiederum ein EDV-Netzwerk ab, wobei ausgehend von einer Klasse 66 "Netzteilnehmer" zwei Klassen 68, 70 "Rechner" und "Drucker" direkt abgeleitet sind. Die Klasse 66 "Netzteilnehmer" weist ein Attribut 72 "IP-Adresse" auf, welches an die Klassen 68, 70 "Rechner" und "Drucker" vererbt wird. Die Klasse 68 "Rechner" verfügt darüber hinaus noch über zwei weitere Attribute 74 "Prozessor" und "Speicher", während die Klasse 70 "Drucker" die eigenen Attribute 76 "Typ" und "Seiten/Min." aufweist.

In der Datenbank sind mit dem erfindungsgemäßen Verfahren für jede der Klassen 66, 68, 70 "Netzteilnehmer", "Rechner" und "Drucker" die Tabellen 78, 80, 82 "T-Netzteilnehmer", "T-Rechner" und "T-Drucker" angelegt, die als Spalten die eigenen sowie die geerbten Attribute ihrer jeweiligen Klasse aufweisen. Darüber hinaus verfügen sie über eine Spalte "OID", in der für jeden Datensatz der Tabelle eine eindeutige Kennung abgelegt werden kann. Des weiteren existieren für die Klassen 66, 68, 70 "Netzteilnehmer", "Rechner", "Drucker" Sichten 84, 86, 88 "V-Netzteilnehmer", "V-Rechner" und "V-Drucker".

Die Tabellen 80, 82 "T-Rechner" und "T-Drucker" enthalten Datensätze für Instanzen der zugehörigen Klasse 68, 70 "Rechner" und "Drucker", wobei die Tabelle 80 "T-Rechner" zwei Datensätze 90, 92 und die Tabelle 82 "T-Drucker" zwei Datensätze 94, 96 enthält. Von der Klasse 66 "Netzteilnehmer" existieren keine unmittelbaren Instanzen, so dass die Tabelle 78 "T-Netzteilnehmer" keine Datensätze enthält.

Sichterzeugungsregeln der zu den Klassen 68, 70 "Rechner" und "Drucker" gehörigen Sichten 86, 88 "V-Rechner" und "V-Drucker" führen zu einer Übernahme der Datensätze 90, 92 in die Sicht 86 "V-Rechner" und der Datensätze 94, 96 in die Sicht 88 "V-Drucker". Zusätzlich zu den übernommenen Spalten der zugehörigen jeweils zugehörigen Tabellen weisen die Sichten 86, 88 "V-Rechner" und "V-Drucker" eine Spalte "Klasse" auf, in der für jeden Datensatz 90, 92, 94, 96 jeweils abgelegt ist, aus der Tabelle welcher Klasse er stammen.

Eine Sichterzeugungsregel der Sicht 84 "V-Netzteilnehmer" legt fest, dass die Sicht 84 "V-Netzteilnehmer" die Spalten der Tabelle 78 "T-Netzteilnehmer" sowie eine zusätzliche Spalte "Klasse" aufweist. Darüber hinaus legt die Sichterzeugungsregel der Sicht 84 "V-Netzteilnehmer" fest, dass die Datensätze der Tabelle 78 "T-Netzteilnehmer" übernommen werden, was in diesem Fall allerdings mangels Datensätze in der Tabelle 78 "T-Netzteilnehmer" keine Auswirkung hat. Zusätzlich dazu werden gemäß der Sichterzeugungsregel der Sicht 84 "V-Netzteilnehmer" die Datensätze 90, 92, 94, 96 übernommen, die in den Sichten 80, 82 "V-Rechner" und "V-Drucker" der Klassen 68,70 "Rechner" und "Drucker" enthalten sind. Dabei werden diese allerdings nur mit denjenigen Spalten übernommen, die die Sicht 84 "V-Netzteilnehmer" selbst aufweist.

Im Ergebnis enthält die Sicht 84 "V-Netzteilnehmer" die Datensätze 90, 92, 94, 96 aller Instanzen der von der Klasse 66 "Netzteilnehmer" abgeleiteten Klassen 68, 70 "Rechner" und "Drucker". Ein Zugriff auf die Daten kann mit dem zu Fig. 1 beschriebenen zweistufigen Verfahren erfolgen, bei dem in einem ersten Schritt eine Abfrage auf die Sicht 84 "V-Netzteilnehmer" erfolgt, in der alle ein bestimmtes Kriterium erfüllenden Instanzen in Form von Datensätzen ermittelt werden, und bei dem anschließend in einen zweiten Schritt die als Ergebnis zurückgelieferten Datensätze aus ihrer jeweiligen Tabelle mit allen vorhandenen Attributen abgefragt werden.

## Patentansprüche

1. Verfahren zum Abbilden eines durch eine Hierarchie mit mehreren Klassen (16, 18, 20; 66, 68, 70) modellierten technischen Systems in eine relationale Datenbank, wobei Instanzen dieser Klassen (16, 18, 20; 66, 68, 70) existieren können und wobei jeder Klasse (16, 18, 20; 66, 68, 70) Attribute (22, 24, 26; 72, 74, 76) zugeordnet sein können,
**dadurch gekennzeichnet, dass**
- in einem ersten Schritt für jede Klasse (16, 18, 20; 66, 68, 70) der Klassenhierarchie jeweils eine Tabelle (28, 30, 32; 78, 80, 82) erzeugt wird, in der Instanzen der Klasse mit den zugeordneten abzulegenden Attributen (22, 24, 26; 72, 74, 76) der Klasse als einzelne Datensätze (38, 40, 42, 44, 46, 48; 90, 92, 94, 96) ablegbar sind, und
- in einem zweiten Schritt eine Sichterzeugungsregel für jede Klasse (16, 18; 66), von der in der Klassenhierarchie wenigstens eine Klasse (18, 20; 68, 70) abgeleitet wurde, abgespeichert wird, wobei eine zu dieser Sichterzeugungsregel gehörende Sicht (34, 36; 84) alle Instanzen der zugeordneten Klasse (16, 18; 66) sowie alle Instanzen der von ihr abgeleiteten Klassen (18, 20; 68, 70) als Datensätze enthält, wobei die Datensätze der Sicht (34, 36, 37; 84, 86, 88) einer Klasse (16, 18, 20; 66, 68, 70) sich zusammensetzen aus den Datensätzen (38, 40, 42, 44, 46, 48; 90, 92, 94, 96) der Tabelle (28, 30, 32; 78, 80, 82) dieser Klasse (16, 18, 20; 66, 68, 70) sowie aus den Datensätzen der Tabellen (32) oder der Sichten (36, 37; 86, 88) der direkt von dieser Klasse (16, 18; 66) abgeleiteten Klassen (18, 20; 68, 70).

2. Verfahren gemäß Anspruch 1,
**dadurch gekennzeichnet, dass** die von abgeleiteten Klassen (18, 20) stammenden Datensätze (42, 44, 46, 48) in der Sicht (34, 36) einer Klasse (16, 18)
- bei abgeleiteten Klassen (18) aus der Sicht (36) dieser abgeleiteten Klasse (18) stammen, sofern von der abgeleiteten Klasse (18) selbst mindestens eine weitere Klasse (20) abgeleitet ist, und
- bei abgeleiteten Klassen (20) aus der Tabelle (32) dieser abgeleiteten Klasse (20) stammen, sofern von der abgeleiteten Klasse (20) keine weiteren Klassen abgeleitet sind.

3. Verfahren gemäß Anspruch 1,
**dadurch gekennzeichnet, dass**
in einem dritten Verfahrensschritt eine Sichterzeugungsregel für jede Klasse (20; 68, 70), von der in der Klassenhierarchie keine Klasse abgeleitet wurde, abgespeichert wird, wobei eine zu dieser Sichterzeugungsregel gehörende Sicht (37; 86, 88) alle Instanzen der zugeordneten Klasse (20; 68, 70) enthält, und dass die Datensätze der Sichten (34, 36, 37; 84, 86, 88) einer jeden Klasse (16, 18, 20; 66, 68, 70) sich zusammensetzen aus den Datensätzen (38, 40, 42, 44, 46, 48; 90, 92, 94, 96) der Tabelle (28, 30, 32; 78, 80, 82) dieser Klasse (16, 18, 20; 66, 68, 70) sowie, falls zu dieser Klasse abgeleitete Klassen existieren, aus den Datensätzen der Sichten (36, 37; 86, 88) der direkt von dieser Klasse (16, 18; 66) abgeleiteten Klassen (18, 20; 68, 70).

4. Verfahren gemäß einem der vorstehenden Ansprüche,
**dadurch gekennzeichnet, dass**
die Tabellen (30, 32; 80, 82) der direkt abgeleiteten Klassen (18, 20; 68, 70) in Form von Spalten wenigstens alle Attribute (22, 24; 72, 74) der Klassen (16, 18; 66), von denen diese abgeleiteten Klassen (18, 20; 68, 70) jeweils abgeleitet wurden, aufweisen.

5. Verfahren gemäß einem der vorstehenden Ansprüche,
**dadurch gekennzeichnet, dass**
in die Sicht (34, 36, 37; 84, 86, 88) einer jeweiligen Klasse (16, 18, 20; 66, 68, 70) nur diejenigen Attribute (22, 24, 26; 72, 74, 76) abgebildet werden, die auch in der Tabelle (28, 30, 32; 78, 80, 82) der Klasse (16, 18, 20; 66, 68, 70) abgebildet sind.

6. Verfahren gemäß einem der vorstehenden Ansprüche,
**dadurch gekennzeichnet, dass**
jede abgelegte Instanz in ihrer Tabelle (28, 30, 32; 80, 82) mit einer eindeutigen Kennung versehen wird und diese eindeutige Kennung der Instanz auch in den Sichten (34, 36, 37; 86, 88) aufgeführt ist, die diese Instanz enthalten.

7. Verfahren gemäß einem der vorstehenden Ansprüche,
**dadurch gekennzeichnet, dass**
in jeder durch eine Sichterzeugungsregel definierten Sicht (34, 36, 37; 84, 86, 88) eine Spalte vorgesehen ist, in der für jeden Datensatz (38, 40, 42, 44, 46, 48; 90, 92, 94, 96) eine Information über die Tabelle (28, 30, 32; 80, 82) abgelegt wird, aus der der Datensatz (38, 40, 42, 44, 46, 48; 90, 92, 94, 96) stammt.

8. Verfahren gemäß Anspruch 7,
**dadurch gekennzeichnet, dass**
es sich bei der Information um den Namen der Klasse (16, 18, 20; 68, 70) handelt, aus der der Datensatz (38, 40, 42, 44, 46, 48; 90, 92, 94, 96) stammt, und/oder um den Namen der zugehörigen Tabelle (28, 30, 32; 80, 82) der Klasse (16, 18, 20; 68, 70) handelt.

9. Verfahren zum Abfragen von Information über ein technisches System aus einer gemäß Anspruch 7 oder 8 in einer relationalen Datenbank abgebildeten Klassenhierarchie mittels
- eines ersten Schritts, bei dem aus der Sicht (34, 36, 37; 84, 86, 88) einer Klasse (16, 18, 20; 66, 68, 70) alle Instanzen dieser Klasse (16, 18, 20; 66, 68, 70) und der von ihr direkt oder indirekt abgeleiteten Klassen (18, 20; 68, 70) ermittelt werden, die vorgegebenen Kriterien entsprechen, und
- eines zweiten Schritts, bei dem die im ersten Schritt ermittelten Instanzen aus den Tabellen (28, 30, 32; 80, 82) ihrer jeweiligen Klasse (16, 18, 20; 68, 70) mit allen benötigten Attributen (22, 24, 26; 72, 74, 76) abgefragt werden.

10. Digitales Speichermedium, insbesondere Diskette, mit elektronisch auslesbaren Steuersignalen, die so mit einem programmierbaren Computersystem zusammenwirken können, dass ein Verfahren nach einem der Ansprüche 1 bis 9 ausgeführt wird.

11. Computerprogrammprodukt mit Programmcodemitteln, die auf einem computerlesbaren Datenträger gespeichert sind, um das Verfahren nach wenigstens einem der Ansprüche 1 bis 9 durchzuführen, wenn das Computerprogrammprodukt auf einem Computer ausgeführt wird.
